# EUROPEAN PATENT APPLICATION

(11) **EP 3 623 852 A1**
(43) Date of publication of application: **18.03.2020**
(21) Application number: 17908793.7
(22) Date of filing: 21.07.2017
(51) Int. Cl.: G02B 3/08, G02B 5/02

(54) **OPTICAL ELEMENT AND OPTICAL SYSTEM DEVICE**

(30) Priority: 11.05.2017 JP 2017094935; 06.07.2017 JP 2017132981
(71) Applicant: Scivax Corporation, Kawasaki-shi, Kanagawa 212-0032 (JP)
(72) Inventor: NAWATA Akifumi, Kawasaki-shi Kanagawa 2120032 (JP); AWAYA Nobuyoshi, Kawasaki-shi Kanagawa 2120032 (JP); TANAKA Satoru, Kawasaki-shi Kanagawa 2120032 (JP)
(74) Representative: Gille Hrabal
(86) International application number: PCT/JP2017/026464
(87) International publication number: WO 2018/207380

(57) **Abstract**

An optical device which can be easily manufactured and which is capable of guiding light to a forward widespread range without a waste, and an optical system apparatus that utilizes the same are provided. This optical device controls a light distribution of entering light from a predetermined site 30 and emits the controlled light, and includes a reflection utilizing portion that includes: a plurality of convex structures 15 each including an incidence surface 11 allowing the light from the predetermined site 30 to travel therethrough, and a reflection surface 12 reflecting the traveling light through the incidence surface 11 in a predetermined direction; and an emit surface 19 that emits that emits the reflected light by the reflection surface 12 in a predetermine light distribution direction.

## Description

### TECHNICAL FIELD

The present disclosure relates to an optical device and an optical system apparatus that utilizes the same.

### BACKGROUND ART

In recent years, LEDs are applied as illumination light sources. According to this trend, a development for an optical system apparatus that guides light forwardly without a waste is advancing. For example, an optical lens assembly that includes a combination of multiple lenses each having an input surface in which light enters, an output surface which outputs the light, and a side surface which is extended between the input surface and the output surface and which reflects incident light from the input surface toward the output surface has been proposed (see, for example, Patent Document 1).

### CITATION LIST

### PATENT LITERATURES

Patent Document 1: JP 2015-529849 A

### SUMMARY OF INVENTION

### TECHNICAL PROBLEM

According to the above optical lens assembly, however, since each lens that is an element is separated from another lens, there is a disadvantage such that an assembling work is necessary. Moreover, there is also a disadvantage such that the number of lenses that can be assembled, and the size of each producible lens has a limit.

Accordingly, an objective of the present disclosure is to provide an optical device which can be easily manufactured and which is capable of guiding light to a forward widespread range without a waste, and an optical system apparatus that utilizes the same.

### SOLUTION TO PROBLEM

An optical device according to the present disclosure includes a first surface and the second surface that face with each other. The first surface is provided with a plurality of convex structures each including an incidence surface and a reflection surface. The incidence surface is formed in a shape capable of guiding the incident light from a predetermined site to the reflection surface. The reflection surface reflects the traveling light through to the second surface.

In this case, the convex structure may be formed in a circular shape, each convex structure may be placed as a concentric circle or in a straight line shape, and the respective convex structures may be formed in parallel with each other.

When the convex structure is formed in a circular shape, and the respective convex structures are placed as a concentric circle, it is preferable that the incidence surface should have a cross-section which passes through the center of the concentric circle and which is orthogonal to the concentric circle as a circular arc around the predetermined site. Moreover, the reflection surface preferably has the cross-section as a parabola that has the predetermined site as a focal point.

Moreover, a refraction lens may be placed at the center portion of the concentric circle.

Furthermore, when the convex structure is formed in a straight line shape and the respective convex structures are placed in parallel with each other, it is preferable that the incidence surface should have a cross-section which is orthogonal to the straight line direction of the convex structure as a circular arc which passes through the predetermined site and which is around at an intersection between a reference line parallel to the straight line direction and the cross-section. Moreover, the reflection surface preferably has the cross-section as a parabola that has the intersection as a focal point.

Still further, it is preferable that the convex structure should be placed mirror symmetrically relative to a plane which includes a reference line passing through the predetermined site and parallel to a straight line direction of the convex structure, and which is parallel to the straight line direction of the convex structure.

Yet still further, a mirror symmetrical refraction lens in a straight line shape may be placed in the plane.

Moreover, it is preferable that the reflection surface should be for total reflection of the traveling light through the incidence surface to the second surface.

In addition, an optical system apparatus according to the present disclosure includes the aforementioned optical device, and a light source placed at the predetermined site.

Moreover, another optical system apparatus according to the present disclosure includes the aforementioned optical device, and a light source placed at a near location to the optical device rather than the predetermined site.

Furthermore, the other optical system apparatus according to the present disclosure includes the aforementioned optical device, and a light source placed at a distant location from the optical device more than the predetermined site.

### ADVANTAGEOUS EFFECTS OF INVENTION

According to the present disclosure, the optical device employs a structure in which the plurality of convex structures is integrated, facilitating the manufacturing by injection molding, etc. Moreover, since assembling is unnecessary, there is an advantage such that the degree of freedom regarding the number of convex structures and the size thereof is large.

### BRIEF DESCRIPTION OF DRAWINGS

FIG. 1 is a diagram illustrating a reference plane shape for an optical device according to the present disclosure;
FIG. 2 is a plan view illustrating a first surface side of the optical device according to the present disclosure;
FIG. 3 is a perspective view illustrating the optical device according to the present disclosure;
FIG. 4 is a perspective view illustrating another optical device according to the present disclosure;
FIG. 5 is an explanatory diagram for explaining a cross-section of a convex structure relating to the optical device according to the present disclosure;
FIG. 6 is a diagram illustrating a light path in the optical device according to the present disclosure;
FIG. 7 is an explanatory diagram for explaining a decision scheme of the convex structure of the optical device according to the present disclosure;
FIG. 8 is a plan view illustrating a first surface side of another optical device according to the present disclosure;
FIG. 9 is a perspective view illustrating another optical device according to the present disclosure;
FIG. 10 is an explanatory diagram for explaining a cross-section of the convex structure relating to the optical device according to the present disclosure;
FIG. 11 is an explanatory diagram for explaining a cross-section of the convex structure relating to another optical device according to the present disclosure; and
FIG. 12 is a diagram illustrating a reference plane shape relating to another optical device according to the present disclosure.

### DESCRIPTION OF EMBODIMENTS

An optical device according to the present disclosure will be described below.

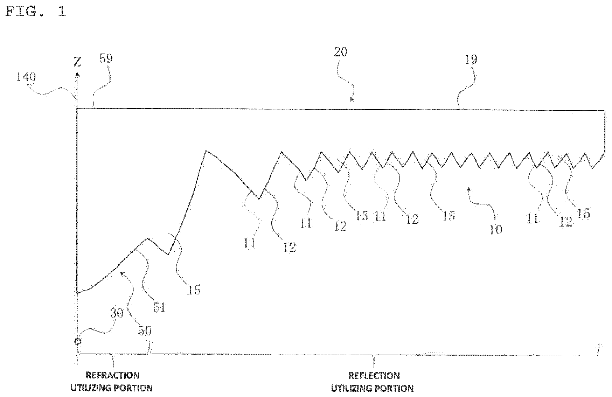

An optical device according to the present disclosure controls and emits the light distribution of light that enters from a predetermined site, and includes at least a reflection utilizing portion. Moreover, as illustrated in FIG. 1, the optical device includes a first surface 10 and a second surface 20 which face with each other and which are each formed of, for example, a tabular transparent dielectric.

Multiple convex structures 15 each including an incidence surface 11 that allows light from a predetermined site 30 to travel therethrough, and a reflection surface 12 that reflects the entering light from the incidence surface 11 to a predetermined direction are provided at the first-surface-10 side. Moreover, the incidence surface 11 is formed in a shape capable of guiding the incident light from the predetermined site 30 to the reflection surface 12, and the reflection surface 12 reflects the entering light from the incidence surface 11 toward the second surface 20.

Provided at the second-surface-20 side is an emit surface 19 that emits the reflected light by the reflection surface 12 in a predetermined light distribution direction.

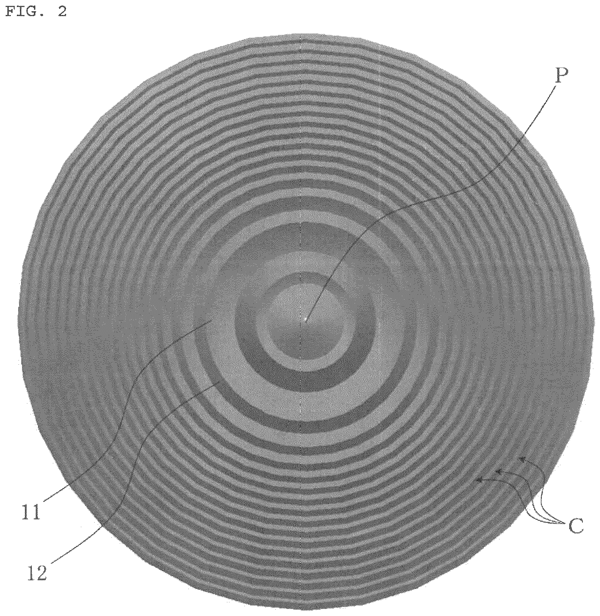

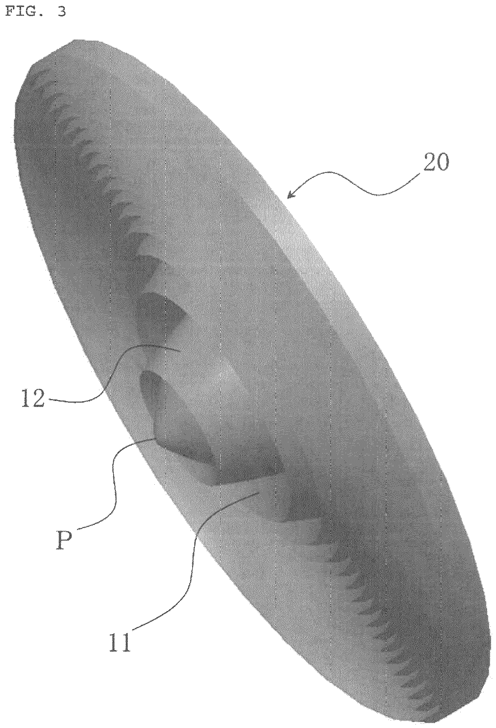

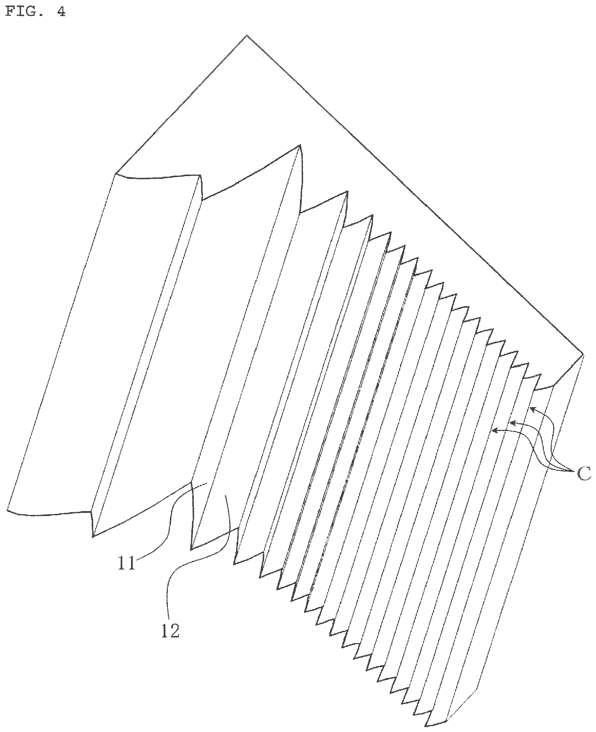

In this case, as illustrated in FIGS. 2 and 3, the optical device according to the present can have (1) a plane shape for reference formed as a rotation body rotated around a center line that is a straight line passing through the predetermined site 30, and as illustrated in FIG. 4, (2) the plane shape for reference formed as a shape parallelly shifted in the normal direction of such a plane shape . In other words, according to the rotation body of (1), a cross-section including the center line becomes consistent with the same shape of the plane shape for reference. Moreover, according to the parallelly shifted body of (2), a cross section by a plane orthogonal to the parallel shifting direction becomes consistent with the shape of the plane shape for reference.

First, a description will be given of a case in which the optical device according to the present disclosure has (1) the plane shape for reference (hereinafter, a reference plane shape) formed as the rotation body rotated around the center line that is a straight line passing through the predetermined site 30. In this case, as illustrated in FIGS. 2 and 3, the convex structure 15 that includes the incidence surface 11 and the reflection surface 12 is formed in a circular shape. Moreover, as illustrated in FIG. 2, each convex structure 15 is placed as a concentric circle C.

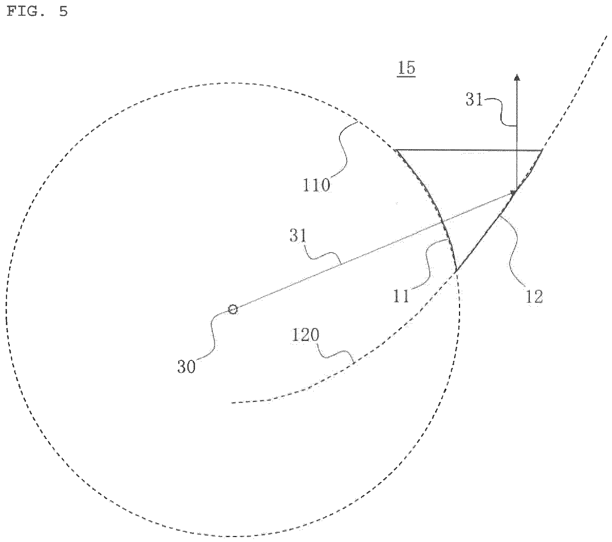

In the case of (1), as long as incident light from the predetermined site 30 can be guided to the reflection surface 12 in view of refraction of light, etc., the incidence surface 11 can employ any structure. For example, it is preferable that, in the reference plane shape (or a cross-section which passes through a center P of the concentric circle C and which is orthogonal to the concentric circle C), the incidence surface 11 should be a circular arc of a circle 110 that has the predetermined site 30 as a center as illustrated in FIG. 5. This allows light 31 to orthogonally enter the incidence surface 11 from the predetermined site 30, and thus such light is hardly reflected but travels straight.

The reflection surface 12 can employ any structure as long as it can reflect received light through the incidence surface 11 toward the second surface 20 side a light received through the incidence surface 11. For example, as illustrated in FIG. 5, the reflection surface 12 may be, in the reference plane shape, parabola 120 that has the predetermined site 30 as a focal point. When, in particular, as illustrated in FIG. 5, in the reference plane shape, when the center point of a circular arc corresponding to the incidence surface 11 is consistent with the focal point of the parabola corresponding to the reflection surface 12, the optical device is capable of causing light 31 reaching the incidence surface 11 from the predetermined site 30 to travel straight through as it is, and further of reflecting such light 31 by the reflection surface 12 in parallel with a Z-direction of a straight line 140 that interconnects the vertex of the parabola and the focal point. Hence, as illustrated in FI. 6, when the emit surface 19 is a plane orthogonal to the Z-direction of the straight line 140 that interconnects the predetermined site 30 and the center P of the concentric circle C, and when a dot light source is placed on the predetermined site 30, the light 31 from the dot light source can be converted into parallel light that is parallel to the Z-direction.

Regarding the positions of the convex structures 15, as illustrated in FIG. 1, those structures may be placed in sequence from the external side so as to be in parallel with the second surface. In this case, however, according to the convex structures 15 near the center of the concentric circle C, light that has entered through the incidence surface 11 does not travel to the reflection surface 12. In this case, the convex structures 15 may be formed so as to increases the size as appropriate as coming close to the center of the concentric circle C.

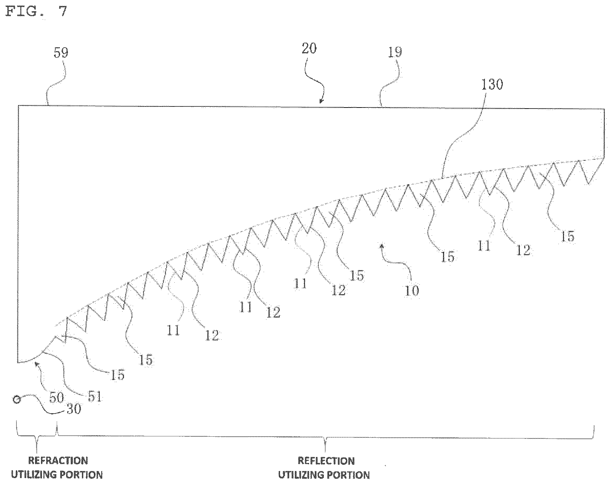

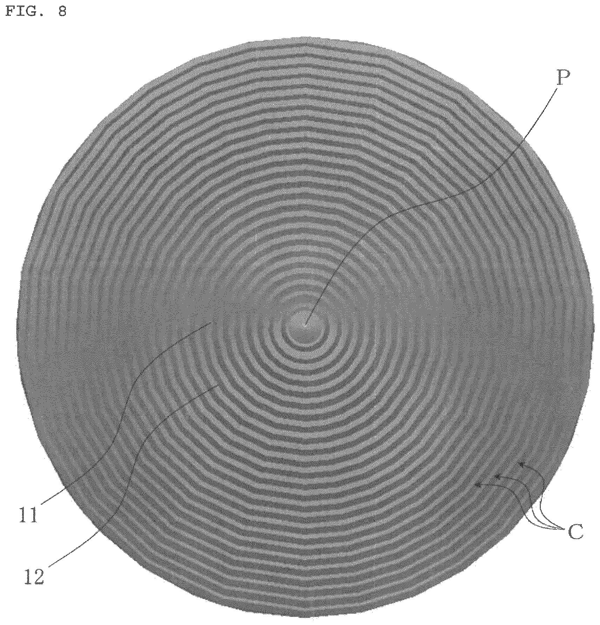

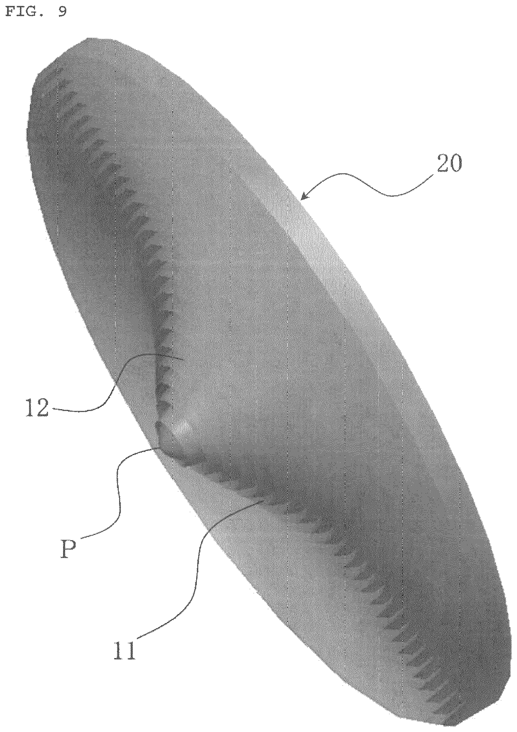

Moreover, regarding the convex structures 15, as illustrated in FIGS. 7 to 9, the convex structures 15 may be formed so as to have the substantially same size but be placed on respective curved lines 130 or respective straight lines that expand as coming close to the center of the concentric circle C. In this case, since the size of the convex structures 15 is uniform, there is an advantage such that the parallel light to be emitted from the second surface 20 can be made uniform in comparison with the optical device illustrated in FIGS. 1 to 3. Note that the curved line 130 (or the straight line) may be formed in any scheme as long as long as the incident light from the predetermined site 30 through the incidence surface 11 goes to the reflection surface 12. Preferably, the sizes of the incidence surface 11 and reflection surface 12, and the location of the convex structure 15 may be adjusted so as to achieve the uniform width of the parallel light to be emitted from the second surface 20 and the uniform width of a portion which becomes a shadow where no parallel light is emitted.

Although the reflection utilizing portion that guides light to the second surface 20 using the incidence surface 11 and the reflection surface 12 has been described, in the location near the center P of the above described concentric circle C, an angle may be created which is unable to form the incidence surface 11 that guides light to the reflection surface 12. In this case, a refraction utilizing portion that causes light from the predetermined site 30 to be refracted may be formed near the center P of the concentric circle C.

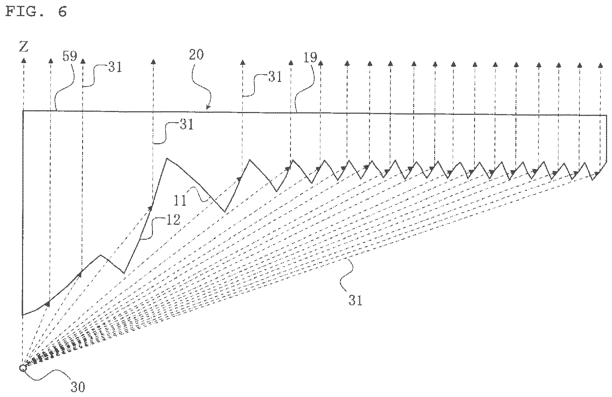

This refraction utilizing portion includes a refraction-utilizing-portion incidence surface 51 capable of causing light from the predetermined site 30 to travel through, and a refraction-utilizing-portion emit surface 59 that emits the traveling light through the refraction-utilizing-portion incidence surface 51 in the predetermined light distribution direction, and for example, a refraction lens 50 is applicable. Moreover, as for the refraction lens 50, as illustrated in FIG. 6, a lens capable of causing light from the dot light source placed at the predetermined site 30 to be refracted so as to be emitted vertically from the second surface 20 is applicable. Furthermore, a Fresnel-lens-like body may be applied as the refraction lens. Note that the emit surface 19 and the refraction-utilizing-portion emit surface 59 may have a partial overlap.

Next, a description will be given of a case in which the optical device according to the present disclosure is formed in (2) a shape that has the plane shape for reference (hereinafter, the reference plane shape) parallelly shifted in the normal direction of the plane shape. In this case, as illustrated in FIG. 4, the convex structure 15 that includes the incidence surface 11 and the reflection surface 12 is formed in a straight line shape in the above described normal direction. Moreover, the respective convex structures are arranged in parallel with each other.

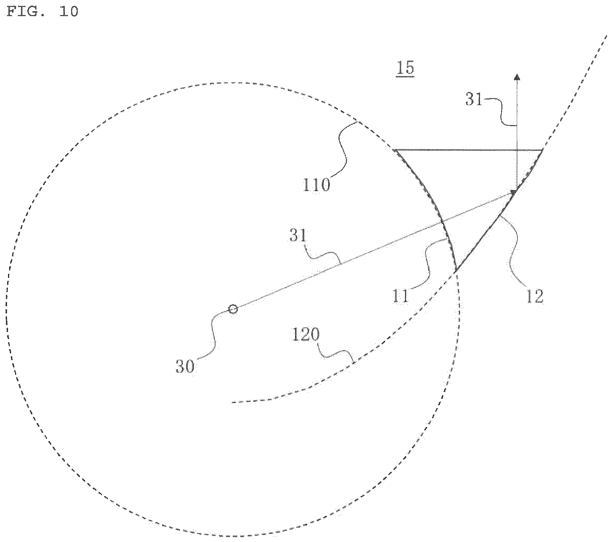

In the case of (2), as long as the incident light from the predetermined site 30 can be guided to the reflection surface 12 in view of refraction etc., the incidence surface 11 can employ any structure. For example, it is preferable that, in the reference plane shape, as illustrated in FIG. 10, the incidence surface 11 should to be a circular arc of a circle 110 around the predetermined site 30. This causes the light 31 to vertically enter the incidence surface 11 from the predetermined site 30, and thus such light is hardly reflected but travels straight.

As long as the received light through the incidence surface 11 is reflected to the second surface 20, the reflection surface 12 can employ any structure. For example, in the reference plane shape, as illustrated in FIG. 10, the reflection surface 12 may be a parabola that has the predetermined site 30 as a focal point. In particular, as illustrated in FIG. 10, in the reference plane shape, when the center point of a circular arc corresponding to the incidence surface 11 is consistent with the focal point of the parabola corresponding to the reflection surface 12, the optical device is capable of causing light 31 reaching the incidence surface 11 from the predetermined site 30 to travel straight through as it is, and further of reflecting such light 31 by the reflection surface 12 in parallel with the Z-direction of the straight line 140 that interconnects the vertex of the parabola and the focal point. Hence, when the emit surface 19 is a plane orthogonal to the Z-direction and when a dot light source is placed on the predetermined site 30, the components of the light reaching the optical device from the dot light source in the orthogonal direction to the straight line direction of the convex structure 15 can be all converted into parallel light that is parallel to the straight line direction.

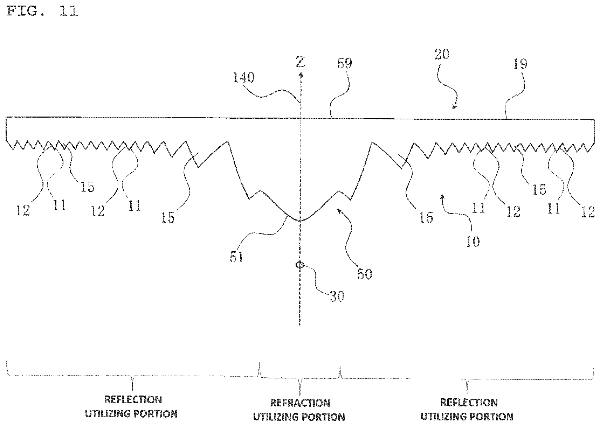

Note that it is preferable that the optical device according to the present disclosure should be formed in mirror symmetrical relative to the straight line 140 in the reference plane shape as illustrated in FIG. 11.

Although the reflection utilizing portion that guides light to the second surface 20 using the incidence surface 11 and the reflection surface 12 has been described, in the location near the straight line 140, an angle may be created which is unable to form the incidence surface 11 that guides light to the reflection surface 12. In this case, a refraction utilizing portion that causes light from the predetermined site 30 to be refracted may be formed near the straight line 140.

This refraction utilizing portion includes the refraction-utilizing-portion incidence surface 51 allowing light from the predetermined site 30 to travel therethrough, and the refraction-utilizing-portion emit surface 59 that emits the traveling light through the refraction-utilizing-portion incidence surface 51 in the predetermined light distribution direction, and for example, the refraction lens 50 is applicable. Moreover, as for the refraction lens 50, as illustrated in FIG. 11, a lens capable of causing light from the dot light source placed at the predetermined site 30 to be refracted so as to be emitted vertically from the second surface 20 is applicable. Furthermore, a Fresnel-lens-like body may be applied as the refraction lens. Note that the emit surface 19 and the refraction-utilizing-portion emit surface 59 may have a partial overlap.

The second surface 20 serves as a surface to emit light. Although the above description has been given of a case in which the emit surface 19 and the refraction-utilizing-portion emit surface 59 that form the second surface 20 are each a plane, the second surface 20 does not need to be a plane, and may be in a curved shape like a convex lens or a concave lens, and a concavo-convex structure like a Fresnel lens may be formed. Moreover, the same or different kind of concavo-convex structure as the above described concavo-convex structure 15 of the first surface may be formed. Needless to say, those structures may be combined.

Note that the above described reflection scheme at the reflection surface 12 involves a scheme that utilizes total reflection, and a scheme that utilizes reflection by metal. When the total reflection is adopted, the reflection surface 12 may be formed in such a way that the incident angle of light received from the predetermined site 30 through the incidence surface 11 may be equal to or greater than an optimal angle. When, for example, the transparent dielectric that forms the optical device is cyclo-olef in polymer (COP), since the index of refraction is 1.41 the optimal angle becomes substantially 45 degrees. In contrast, when the reflection by metal is adopted, a metal like silver may be formed by vapor deposition on the surface of the reflection surface 12.

Moreover, although light enters from the first surface 10 and is emitted from the second surface 20 according to the above described optical device of the present disclosure, oppositely, the light may enter from the second surface 20 and emitted from the first surface 10.

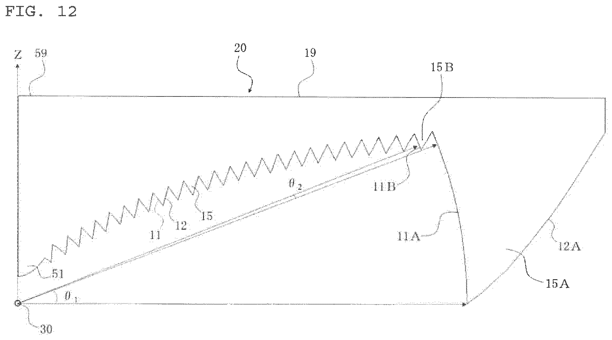

Moreover, as for the optical device according to the present disclosure, in both cases of (1) and (2), it is appropriate that, as illustrated in FIG. 12, in the reference plane shape, an incidence surface 11A that forms the outermost convex structure 15A from the predetermined site 30 should be formed so as to have a wider range θ of incident angle of light from the predetermined site 30 than that of the incidence surface 11B that forms the adjoining convex structure 15B. Further preferably, in the reference plane shape, the outermost convex structure 15A from the predetermined site 30 may be formed so as to be able to receive light from the predetermined site 30 in the range of 180 degrees (the range of 90 degrees relative to the Z-direction) . This causes light from the incidence surface 11A to be reflected by the reflection surface 12A, and thus light from the predetermined site 30 can be further effectively utilized. The term range of the incident angle of light from the predetermined site 30 means a difference between the maximum value of the incident angle of light and the minimum value thereof which can enter the incidence surface of each convex structure from the predetermined site 30. Accordingly, in the case of the incidence surface 11A which forms the outermost convex structure 15A and which is illustrated in FIG. 12, the range of incident angle of light from the predetermined site 30 is θ₁, and in the case of the incidence surface 11B that forms the adjoining convex structure 15B, the range of incident angle of light from the predetermined site 30 is θ₂.

Next, an optical system apparatus according to the present disclosure will be described. A first optical system apparatus according to the present disclosure includes the above described optical device of the present disclosure, and a light source placed at the predetermined site 30. The optical device employs the same structure as that of the above described optical device according to the present disclosure, the description will be omitted.

The light source may be any light source as long as it produces light, but a dot light source or a linear light source that spreads light radially. More specifically, examples of such light source are an LED, an incandescent lamp, a fluorescent light, etc.

By employing such a structure, when light emitted from the light source enters the first surface 10 of the optical device, the optical system apparatus according to the present disclosure can emit the light as parallel light from the second surface 20.

Moreover, a second optical system apparatus according to the present disclosure includes the above described optical device of the present disclosure, and a light source placed at a near site to the optical device rather than the predetermined site 30. The optical device and the light source are the same as those of the above described optical system apparatus according to the present disclosure, the description will be omitted.

By employing such a structure, when light emitted from the light source enters the first surface 10 of the optical device, the optical system apparatus according to the present disclosure can emit the light as convergent light from the second surface 20.

Furthermore, a third optical system apparatus according to the present disclosure includes the above described optical device of the present disclosure, and a light source placed at a distant site from the optical device more than the predetermined site 30. The optical device and the light source are the same as those of the above described optical system apparatus according to the present disclosure, the description will be omitted.

By employing such a structure, when light emitted from the light source enters the first surface 10 of the optical device, the optical system apparatus according to the present disclosure can emit the light as diffusion light from the second surface 20.

In the first to third optical system apparatuses according to the present disclosure, it is preferable to place a mirror that can reflect light from the light source to a side of the light source opposite to the optical device. This enables effective utilization of light emitted at a side of the light source where no optical device is present. For example, such a mirror may be formed in a spherical shape that reflects incident light from the light source in the incident direction.

### REFERENCE SIGNS LIST

- 10: First surface
- 11: Incidence surface
- 11A: Incidence surface
- 11B: Incidence surface
- 12: Reflection surface
- 12A: Reflection surface
- 15: Convex structure
- 15A: Convex structure
- 15B: Convex structure
- 20: Second surface
- 30: Predetermined site
- 31: Light
- 50: Refraction lens
- 51: Tangent line
- 52: Normal line
- 110: Circle
- 120: Parabola
- 130: Curved line
- C: Concentric circle
- P: Center

## Claims

1. An optical device which controls a light distribution of entering light from a predetermined site and which emits the controlled light, the optical device comprising:
a reflection utilizing portion that comprises:
a plurality of convex structures each including an incidence surface allowing the light from the predetermined site to travel therethrough, and a reflection surface reflecting the traveling light through the incidence surface in a predetermined direction; and
an emit surface that emits that emits the reflected light by the reflection surface in a predetermine light distribution direction.

2. The optical device according to claim 1, which is a rotation body having a plane shape for reference rotated around a center line that is a straight line passing through the predetermined site.

3. The optical device according to claim 1, which is in a shape having a plane shape for reference parallelly shifted in a normal direction of the plane shape.

4. The optical device according to claim 2 or 3, wherein, in the plane shape, the incidence surface is a circular arc around the predetermined site.

5. The optical device according to claim 4, wherein, in the plane shape, the reflection surface is a parabola having the predetermined site as a focal point.

6. The optical device according to claim 5, wherein, in the plane shape, the emit surface is formed in a straight line shape enabling the reflected light by the reflection surface to travel vertically.

7. The optical device according to any one of claims 1 to 6, wherein the incidence surface that forms the outermost convex structure from the predetermined site is formed so as to have a wider range of incident angle of light from the predetermined site than the incidence surface that forms the adjoining convex structure.

8. The optical device according to any one of claims 1 to 7, further comprising a refraction utilizing portion that refracts the light from the predetermined site,
wherein the refraction utilizing portion comprises:
a refraction-utilizing-portion incidence surface allowing the light from the predetermined site to travel through; and
a refraction-utilizing-portion emit surface that emits the traveling light through the refraction-utilizing-portion incidence surface in the predetermined light distribution direction.

9. The optical device according to claim 8, wherein the refraction utilizing portion is formed on a plane, and the refraction-utilizing-portion incidence surface causes the light from the predetermined site to be refracted so as to enter the refraction-utilizing-portion emit surface vertically.

10. The optical device according to claim 8 or 9, wherein the refraction-utilizing-portion incidence surface is formed in a Fresnel-lens shape.

11. The optical device according to any one of claims 1 to 10, wherein the reflection surface is for total reflection of the traveling light through the incidence surface toward the emit surface.

12. An optical system apparatus comprising:
the optical device according to any one of claims 1 to 11; and
a light source placed at the predetermined site.

13. An optical system apparatus comprising:
the optical device according to any one of claims 1 to 11; and
a light source placed at a near location to the optical device rather than the predetermined site.

14. An optical system apparatus comprising:
the optical device according to any one of claims 1 to 11; and
a light source placed at a distant location from the optical device more than the predetermined site.

15. The optical system apparatus according to any one of claims 12 to 14, further comprising a mirror placed at a side of the light source opposite to the optical device.

16. The optical system apparatus according to claim 15, wherein the mirror is formed in a spherical shape that reflects incident light from the light source in an incident direction.
